# EUROPEAN PATENT APPLICATION

(11) **EP 3 650 195 A1**
(43) Date of publication of application: **13.05.2020**
(21) Application number: 18844591.0
(22) Date of filing: 01.08.2018
(51) Int. Cl.: B29C 48/40

(54) **SCREW EXTRUDER WITH ROLLERS**

(30) Priority: 10.08.2017 JP 2017155810
(71) Applicant: Kabushiki Kaisha Kobe Seiko Sho (Kobe Steel, Ltd.), Kobe-shi, Hyogo 651-8585 (JP)
(72) Inventor: HIGASHI, Kosuke, Kobe-shi, Hyogo 651-2271 (JP); FUKUTANI, Kazuhisa, Kobe-shi, Hyogo 651-2271 (JP)
(74) Representative: TBK
(86) International application number: PCT/JP2018/028847
(87) International publication number: WO 2019/031350

(57) **Abstract**

A screw extruder with rollers (1) includes a screw (2,3) which extrudes a material; a casing (4) which houses the screw (2,3) and which is provided with a charging port (12) for the material; and a pair of an upper roller (5) and a lower roller (6) which are arranged in front of the casing (4) and mold the material extruded by the screw (2,3) into a sheet, in which one of the upper roller (5) and the lower roller (6) has both end portions in an axial direction, and a main body portion between the both end portions, and a cross-section of the main body portion perpendicular to the axial direction has an oval shape.

## Description

### Technical Field

The present invention relates to a screw extruder with rollers which molds a material into a sheet by extrusion.

### Background Art

In a process of manufacturing a tire for automobile, an extrusion molding machine is used. The extrusion molding machine is installed under a kneader which kneads rubber as a raw material of a tire, and molds rubber (material) introduced from the kneader into a sheet by continuously extruding the rubber. As a technique related to an extrusion molding machine of this kind, for example, sheet molding apparatuses recited in Patent Literatures 1 and 2 shown below are known.

The sheet molding apparatus recited in Patent Literature 1 includes a conical twin screw extruder and a pair of upper and lower rolling rollers disposed in proximity to a front opening portion of the twin screw extruder. The lower rolling roller of the pair of rolling rollers has a diameter larger than a diameter of the upper rolling roller.

The sheet molding apparatus recited in Patent Literature 2 includes a material supply unit which supplies a material by extrusion, a material storage portion which temporarily stores the material extruded and supplied, a material pressing unit which applies pressing force to the stored material, and a material rolling unit which molds the stored material into a sheet and discharges the sheet. The material supply unit includes twin tapered screws and the material rolling unit includes a pair of upper and lower rollers.

Here, the pair of rollers constituting each of the sheet molding apparatuses recited in Patent Literatures 1 and 2 each have a round cross-section perpendicular to an axial direction.

In recent years, there is an increasing demand for fuel-efficient tires. Rubber as a raw material of a fuel-efficient tire often contains silica at a high mixing ratio. Rubber (material) in which silica is mixed at a high ratio has a problem that it is difficult to mold rubber into a sheet by an extrusion molding machine. Therefore, it is desired to increase dispersion and mixability of rubber (material) not only at a kneader in an upstream side process but also at the extrusion molding machine. In other words, it is desired to add a material kneading function to the extrusion molding machine in addition to a sheet molding function of forming a material into a sheet.

However, screws constituting the sheet molding apparatuses (extrusion molding machines) recited in Patent Literatures 1 and 2 only have a material extruding function and the rollers only have a material rolling function. In other words, since none of the screws and rollers constituting the sheet molding apparatuses recited in Patent Literatures 1 and 2 has a material kneading function, the sheet molding apparatuses recited in Patent Literatures 1 and 2 cannot have improved material dispersion mixability.

### Citation List

### Patent Literature

Patent Literature 1: Japanese Unexamined Patent Publication No. H06-64020
Patent Literature 2: Japanese Unexamined Patent Publication No. 2011-73428

### Summary of Invention

The present invention has been made in view of the foregoing circumstances and an object thereof is to provide a screw extruder with rollers having a material kneading function in addition to a sheet molding function of forming a material into a sheet.

A screw extruder with rollers according to the present invention serves for molding a material into a sheet by extrusion. The screw extruder with rollers includes a screw which extrudes the material; a casing which houses the screw and which is provided with a charging port for the material; and a pair of an upper roller and a lower roller which are arranged in front of the casing and mold the material extruded by the screw into a sheet. One of the upper roller and the lower roller has both end portions in an axial direction, and a main body portion between the both end portions, in which a cross-section of the main body portion perpendicular to the axial direction has an oval shape.

### Brief Description of Drawings

FIG. 1 is a sectional view of a screw extruder with rollers according to one embodiment of the present invention, which is a view of the screw extruder with rollers seen from above.
FIG. 2 is a block diagram showing a functional configuration of a controller provided in the screw extruder with rollers shown in FIG. 1.
FIG. 3 is a sectional view taken along line III-III shown in FIG. 1.
FIG. 4 is an enlarged view of an IV part shown in FIG. 3.
FIG. 5 is a schematic view of a screw extruder with rollers according to another embodiment of the present invention seen from the side.
FIG. 6 is a graph showing a relationship between the accumulated number of rotations of the rollers and an average pressure of a bank portion in the screw extruder with rollers shown in FIG. 5.
FIG. 7 is a graph showing a relationship between a rotation phase of the roller and a gap size between the rollers in the screw extruder with rollers shown in FIG. 5.
FIG. 8 is a graph showing a relationship between a change of a sheet thickness and a major axis length and a minor axis length of an elliptic shape on a cross-section of the roller in the screw extruder with rollers shown in FIG. 5.
FIG. 9 is a schematic view of a screw extruder with rollers according to still another embodiment of the present invention seen from the side.
FIG. 10 is a schematic view of a screw extruder with rollers according to yet another embodiment of the present invention.
FIG. 11 is a graph showing a relationship between a change of a sheet thickness and a major axis length and a minor axis length of an elliptic shape on a cross-section of the roller in the screw extruder with rollers shown in FIG. 10.
FIG. 12 is a flow chart showing one example of a control method of the screw extruder with rollers for stabilizing a sheet thickness.
FIG. 13 is a flow chart showing another example of a control method of the screw extruder with rollers for stabilizing a sheet thickness.
FIG. 14 is a schematic view showing one example of a cross-sectional shape of the roller in the screw extruder with rollers according to the embodiment.
FIG. 15 is a schematic view showing another example of a cross-sectional shape of the roller in the screw extruder with rollers according to the embodiment.

### Description of Embodiments

In the following, embodiments of the present invention will be described with reference to the drawings. A screw extruder with rollers according to the present embodiment is a machine which molds a kneaded product (material) of a polymeric material such as rubber into a sheet by extrusion. An object to be molded by the screw extruder with rollers of the present invention is not limited to rubber but include other materials such as food material.

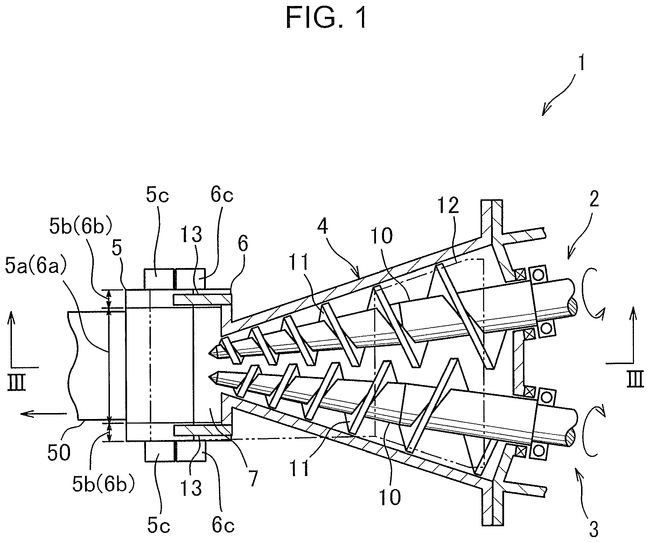

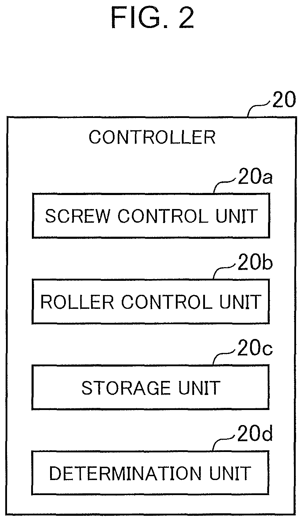

First, with reference to FIG. 1 and FIG. 2, description will be made of basic configuration of the screw extruder with rollers according to the present embodiment and main features of the present invention. A screw extruder 1 with rollers according to the present embodiment includes screws 2 and 3 which extrude a material; a casing 4 which houses the screws 2 and 3 and which is provided with a charging port 12 for the material; a pair of an upper roller 5 and a lower roller 6 which are provided in front of the casing 4 and mold the material extruded by the screws 2 and 3 into a sheet; and a controller 20 as shown in FIG. 1 and FIG. 2. A bank portion 7 (a material storage portion) where a material extruded by the screws 2 and 3 is accumulated is provided between the casing 4 and the pair of rollers 5 and 6. In the present embodiment, a direction (e.g. left in FIG. 1) from the screws 2 and 3 toward the pair of rollers 5 and 6 is considered as a front.

Although the screw extruder with rollers of the present invention may include a single screw which extrudes a material, the screw extruder 1 with rollers according to the present embodiment includes a pair of right and left screws 2 and 3. The screws 2 and 3 each have a shaft portion 10, and a spiral flight portion 11 provided on an outer circumferential surface of the shaft portion 10. The screw 2 and the screw 3 have the same shape and the same size except that spiral directions of the flight portions 11 are opposite to each other. The screws 2 and 3 are coupled to rotate in directions opposite to each other and are configured to make the same speed of rotation by one drive means (not shown). The screws 2 and 3 can be configured to individually rotate by separate drive means.

The casing 4 has a tapered shape, and the charging port 12 for a material is provided in an upper portion of the casing 4. The material (e.g. a kneaded product of rubber and silica) supplied to the charging port 12 from above is extruded by the screws 2 and 3 rotating in directions opposite to each other to the bank portion 7 and is then passed between the rollers 5 and 6 to be molded into a sheet.

The material extruded by the screws 2 and 3 is once accumulated in the bank portion 7 (the material storage portion) before reaching the pair of rollers 5 and 6.

The pair of rollers 5 and 6 are coupled to each other to rotate in opposite directions to each other and are configured to make, for example, the same speed of rotation by one drive means (not shown). The rollers 5 and 6 may be configured to individually rotate by separate drive means. The rollers 5 and 6 roll a material to mold the material into a sheet (a sheet 50), which is referred to as a roller die in some cases.

The upper roller 5 is supported by a supporting member (a member constituting a part of the screw extruder 1 with rollers) (not shown) so as to be rotatable around a rotation axis. The lower roller 6 is supported by the supporting member so as to be rotatable around a rotation axis. The upper roller 5 and the lower roller 6 are supported by the supporting member in a position that allows an axial direction of the rotation axis of the upper roller 5 and an axial direction of the rotation axis of the lower roller 6 to be parallel to each other. The upper roller 5 and the lower roller 6 are arranged at an interval in a direction perpendicular to the axial direction (radial direction). The upper roller 5 has a main body portion 5a, both end portions 5b, and a pair of shaft portions 5c. Similarly, the lower roller 6 has a main body portion 6a, both end portions 6b, and a pair of shaft portions 6c.

The main body portion 5a of the upper roller 5 and the main body portion 6a of the lower roller 6 have outer circumferential surfaces (main body outer circumferential surfaces) opposed to each other at an interval in the radial direction. These main body outer circumferential surfaces are parts which roll a material extruded by the screws 2 and 3 to mold the material into a sheet.

The both end portions 5b of the upper roller 5 are configured with a first end portion 5b and a second end portion 5b positioned at both outer sides of the main body portion 5a of the upper roller 5 in the axial direction. The both end portions 6b of the lower roller 6 are configured with a first end portion 6b and a second end portion 6b positioned at both outer sides of the main body portion 6a of the lower roller 6 in the axial direction.

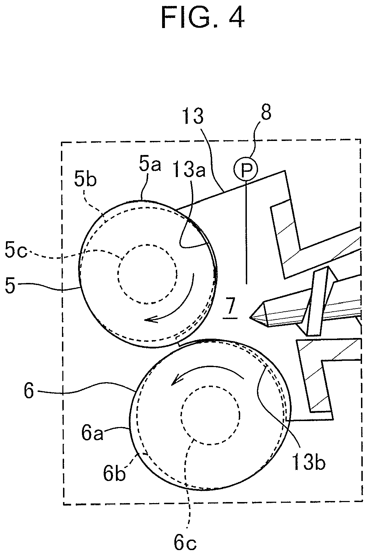

The first end portion 5b of the upper roller 5 and the first end portion 6b of the lower roller 6 have outer circumferential surfaces (end portion outer circumferential surfaces) opposed to each other at an interval in the radial direction. Similarly, the second end portion 5b of the upper roller 5 and the second end portion 6b of the lower roller 6 have outer circumferential surfaces (end portion outer circumferential surfaces) opposed to each other at an interval in the radial direction. The pair of end portion outer circumferential surfaces of the upper roller 5 are parts to which circular arc surfaces 13a of a pair of side guards 13 that will be described later are opposed in the radial direction, and the pair of end portion outer circumferential surfaces of the lower roller 6 are parts to which circular arc surfaces 13b of the pair of side guards 13 that will be described later are opposed in the radial direction (see FIG. 1 and FIG. 4).

The pair of shaft portions 5c of the upper roller 5 are parts supported by the supporting member in a state where the upper roller 5 is rotatable. As shown in FIG. 1, the pair of shaft portions 5c are configured with a first shaft portion 5c positioned at an outer side of the first end portion 5b in the axial direction and a second shaft portion 5c positioned at an outer side of the second end portion 5b in the axial direction. In the upper roller 5, the pair of shaft portions 5c have an outer diameter smaller than an outer diameter of the both end portions 5b. Similarly, the pair of shaft portions 6c of the lower roller 6 are parts supported by the supporting member in a state where the lower roller 6 is rotatable. The pair of shaft portions 6c are configured with a first shaft portion 6c positioned at an outer side of the first end portion 6b in the axial direction and a second shaft portion 6c positioned at an outer side of the second end portion 6b in the axial direction. In the lower roller 6, the pair of shaft portions 6c have an outer diameter smaller than an outer diameter of the both end portions 6b.

In at least one of the upper roller 5 and the lower roller 6, at least a cross-section of the main body portion perpendicular to the axial direction has an oval shape. This configuration is a main feature of the present invention.

In the present embodiment, a cross-section of the main body portion 5a of the upper roller 5 perpendicular to the axial direction and a cross-section of the main body portion 6a of the lower roller 6 perpendicular to the axial direction have oval shapes. More specifically, on the cross-section of the main body portion 5a of the upper roller 5, a part (an outer circumferential portion) corresponding to an outer circumferential surface of the main body portion 5a has an oval shape and on the cross-section of the main body portion 6a of the lower roller 6, a part (an outer circumferential portion) corresponding to an outer circumferential surface of the main body portion 6a has an oval shape.

The main body portion 5a of the upper roller 5 is configured with a succession of the cross-sections having the oval shape in the axial direction. Similarly, the main body portion 6a of the lower roller 6 is configured with a succession of the cross-sections having the oval shape in the axial direction.

However, in the present invention, in at least one of the upper roller 5 and the lower roller 6, the cross-section of the main body portion only needs to have an oval shape. Accordingly, only the cross-section of the main body portion 5a of the upper roller 5 may have an oval shape and the cross-section of the main body portion 6a of the lower roller 6 may have, for example, a round shape. Also, only the cross-section of the main body portion 6a of the lower roller 6 may have an oval shape and the cross-section of the main body portion 5a of the upper roller 5 may have, for example, a round shape.

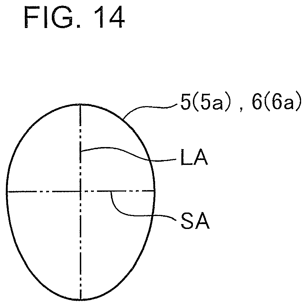

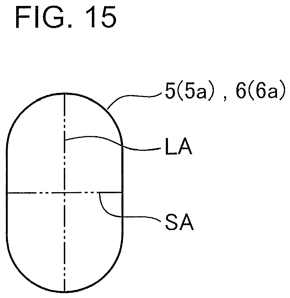

Here, the oval shapes include an ovate shape, an oblong shape, and an elliptic shape. In the present embodiment, although the cross-sections of the main body portions 5a and 6a of the rollers 5 and 6 have an elliptic shape among the oval shapes, the cross-sections may have an ovate shape or an oblong shape. An ovate shape may be illustrated as a shape shown in FIG. 14. The ovate shapes include a shape obtained by connecting an arc and an elliptic arc, a shape obtained by connecting two elliptic arcs having eccentricities different from each other, and the like. The oblong shape is a shape similar to a track in an athletic field as shown in FIG. 15, which is a shape obtained by two arcs (or elliptic arcs) and two parallel lines of the same length which connect these arcs (or elliptic arcs). As shown in FIG. 14 and FIG. 15, an ovate shape and an oblong shape each have a major axis LA and a minor axis SA.

In the present embodiment, since the cross-section perpendicular to the axial direction has an oval shape in the main body portion of at least one of the upper roller 5 and the lower roller 6, when the upper roller 5 and the lower roller 6 rotate, a capacity of the bank portion 7 (the material storage portion) between these rollers 5 and 6 and the casing 4 is changed. When the capacity of the bank portion 7 changes, a flow of a material extruded from the casing 4 to the bank portion 7 becomes more complicated than a conventional material flow, resulting in imparting kneading action to the material. While in the bank portion 7, a flow of a material is generated in a direction from the screws 2 and 3 to the rollers 5 and 6, a change of the capacity of the bank portion 7 induces, in addition to this flow, a flow (back flow) of the material from the rollers 5 and 6 toward the screws 2 and 3 in the bank portion 7. This makes a flow of the material extruded from the casing 4 to the bank portion 7 more complicated than a conventional flow.

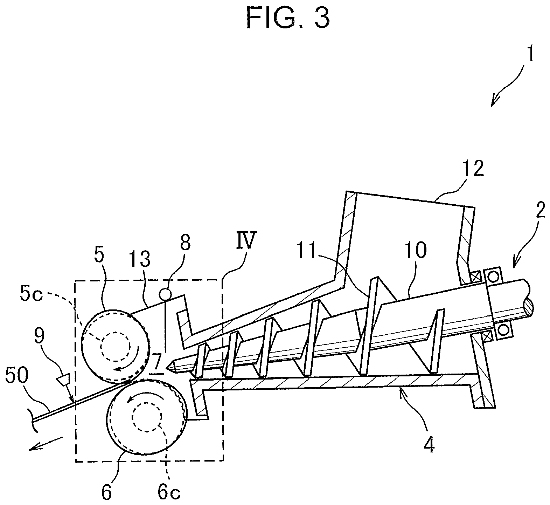

As to rotation of the rollers 5 and 6, although a phase difference between the upper roller 5 and the lower roller 6 is not particularly limited, the upper roller 5 and the lower roller 6 preferably rotate to have a phase difference therebetween of 90°. Specifically, the upper roller 5 and the lower roller 6 preferably rotate at the same rotation speed so as to maintain a phase difference at 90°. FIG. 3 and FIG. 4 show a state where the upper roller 5 and the lower roller 6 have a phase difference of 90°. When the upper roller 5 and the lower roller 6 rotate with the phase difference of 90°, a size of a gap (a roller gap size) between the roller 5 and the roller 6 has the smallest change, resulting in reducing a change of a thickness of the sheet 50. This enables the thickness of the sheet 50 extruded from between the rollers 5 and 6 to be more stable (constant).

The phase difference is defined by an angle formed by a major axis of an oval shape (an ellipse in FIG. 4) of the cross-section of the main body portion 5a of the upper roller 5 perpendicular to the axial direction and a major axis of an oval shape (an ellipse in FIG. 4) of the cross-section of the main body portion 6a of the lower roller 6 perpendicular to the axial direction as shown in FIG. 4.

As shown in FIG. 3 and FIG. 4, for preventing a material stored in the bank portion 7 from leaking to an outer side in the axial direction of the main body portions 5a and 6a of the rollers 5 and 6 in the present embodiment, the cross-sections of the both end portions 5b and 6b of the rollers 5 and 6 have a round shape. More specifically, on the cross-sections of the both end portions 5b of the upper roller 5, a part (an outer circumferential portion) corresponding to an outer circumferential surface of each of the both end portions 5b has a round shape, and on the cross-sections of the both end portions 6b of the lower roller 6, a part (an outer circumferential portion) corresponding to an outer circumferential surface of each of the both end portions 6b has a round shape. Then, cross-sections of the main body portions 5a and 6a between the both end portions 5b and 6b have an oval shape (an elliptic shape in the present embodiment) as described above. Thus, it is preferable that the cross-sectional shapes of the both end portions 5b and 6b of the upper roller 5 and the lower roller 6 are round, and that in at least one of the upper roller 5 and the lower roller 6 (the both rollers 5 and 6 in the present embodiment), the cross-sectional shapes of the main body portions 5a and 6a have an oval shape.

As shown in FIG. 1, FIG. 3, and FIG. 4, the screw extruder 1 with rollers includes the pair of side guards 13. The pair of side guards 13 are provided to prevent a material stored in the bank portion 7 from leaking to an outer side in the axial direction of the main body portions 5a and 6a of the rollers 5 and 6. As shown in FIG. 1, the pair of side guards 13 are arranged at an interval in the axial direction. The pair of side guards 13 are arranged between the casing 4 and the pair of rollers 5 and 6 as shown in FIG. 1 and FIG. 3.

As shown in the enlarged view of FIG. 4, each of the pair of side guards 13 has a base end portion (a rear end portion) connected to the casing 4 and a distal end portion (a front end portion) opposed to the pair of rollers 5 and 6. The distal end portion of one side guard 13 has the circular arc surface 13a opposed to the first end portion 5b of the both end portions 5b of the upper roller 5, and the circular arc surface 13b opposed to the first end portion 6b of the both end portions 6b of the lower roller 6. The distal end portion of the other side guard 13 has the circular arc surface 13a opposed to the second end portion 5b of the both end portions 5b of the upper roller 5, and the circular arc surface 13b opposed to the second end portion 6b of the both end portions 6b of the lower roller 6.

Although in the present embodiment, each of the pair of side guards 13 has a plate shape perpendicular to the axial direction, the shape of the side guard 13 is not limited to a plate shape as long as a material stored in the bank portion 7 can be prevented from leaking to an outer side in the axial direction of the main body portions 5a and 6a of the rollers 5 and 6. An inner wall surface of one side guard 13 and an inner wall surface of the other side guard 13 are opposed to each other at an interval in the axial direction and constitute a part of an inner wall surface which partitions the bank portion 7.

In a case where the cross-sectional shapes of the both end portions 5b and 6b of the rollers 5 and 6 are round, in other words, in a case where the both end portions 5b and 6b of the rollers 5 and 6 are cylindrical, when the rollers 5 and 6 are rotated, a gap between the both end portions 5b and 6b and the circular arc surfaces 13a and 13b of the side guard 13 (see FIG. 3 and FIG. 4) can be maintained constantly to be a fixed gap size (a fixed small gap size). As a result, it is possible to prevent leakage of a material from such bank portion 7 as described above.

As shown in FIG. 3 and FIG. 4, the screw extruder 1 with rollers of the present embodiment further includes a pressure sensor 8 which measures a pressure of the bank portion 7 (a material in the bank portion 7), and a thickness sensor 9 which measures a thickness of a sheet-shaped material (the sheet 50) extruded from between the pair of rollers 5 and 6. The pressure sensor 8 and the thickness sensor 9 are used for control for reducing a change in the thickness of the sheet 50 (to be detailed later). Although the screw extruder 1 with rollers preferably has at least one of the pressure sensor 8 and the thickness sensor 9, the pressure sensor 8 and the thickness sensor 9 are not essential in the screw extruder 1 with rollers and can be omitted.

The controller 20 is configured with a central processing unit (CPU), a ROM which stores various control programs, a RAM used as a work region of the CPU, and the like. As shown in FIG. 2, the controller 20 includes a screw control unit 20a, a roller control unit 20b, a storage unit 20c, and a determination unit 20d as functions.

The screw control unit 20a controls the speed of rotation of each of the screws 2 and 3. The roller control unit 20b controls the speed of rotation of each of the rollers 5 and 6. The storage unit 20c stores information about a pressure measured by the pressure sensor 8. The storage unit 20c stores information about a sheet thickness measured by the thickness sensor 9. The determination unit 20d compares a value regarding a pressure measured by the pressure sensor 8 and a threshold value set in advance regarding a pressure and determines whether or not these values satisfy a predetermined condition. The determination unit 20d also compares a value regarding a sheet thickness measured by the thickness sensor 9 and a threshold value set in advance regarding a sheet thickness and determines whether or not these values satisfy a predetermined condition.

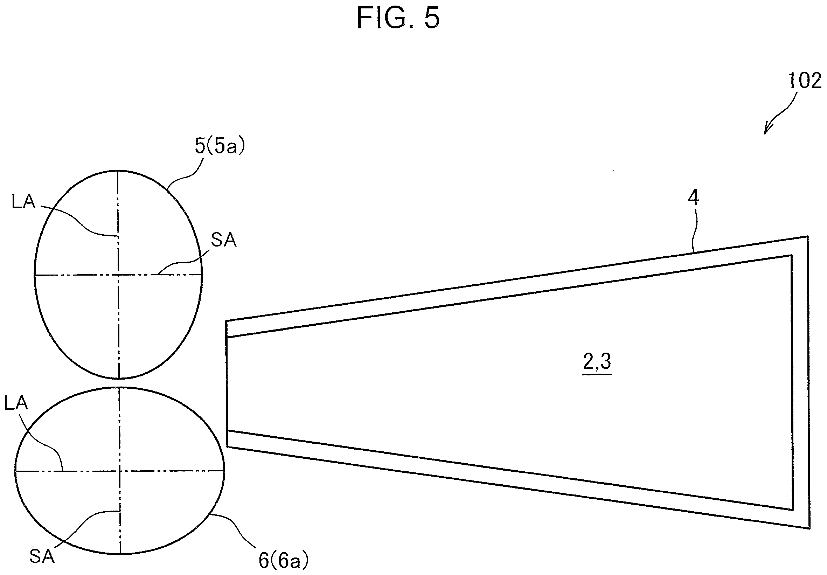

FIG. 5 shows another embodiment of a pair of rollers 5 and 6. In the screw extruder 1 with rollers shown in FIG. 1 and FIG. 2, the lower roller 6 is slightly larger than the upper roller 5. By contrast, in a screw extruder 102 with rollers shown in FIG. 5, cross-sections of main body portions 5a and 6a of an upper roller 5 and a lower roller 6 have an oval shape (an elliptic shape in the present embodiment) having the same shape and the same circumferential length. In other words, the upper roller 5 and the lower roller 6 have completely the same shape and size. This configuration provides an advantage of facilitating control of the speeds of rotations of the rollers 5 and 6. For example, in a case where the rollers 5 and 6 have different shapes, there occurs a phenomenon that an in-flow amount of a material on an upstream side of each roller and an out-flow amount of a material on a downstream side largely change in time series to make complicated control for realizing uniform material in-flow and out-flow. In a case where the rollers 5 and 6 have the same shape, the above phenomenon can be avoided to facilitate control.

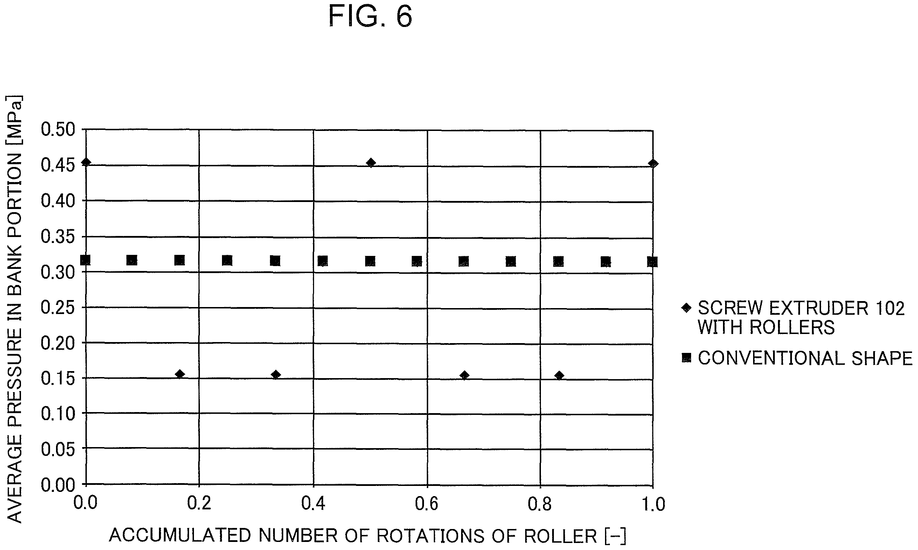

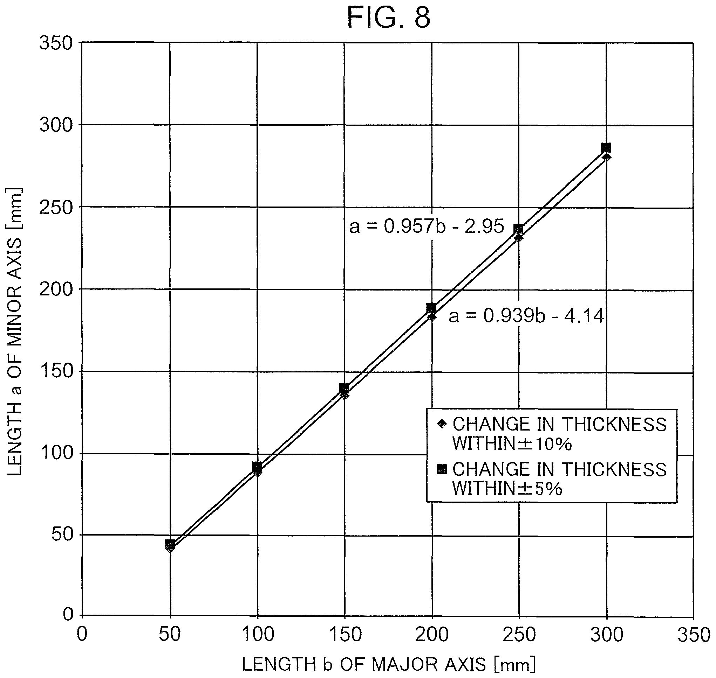

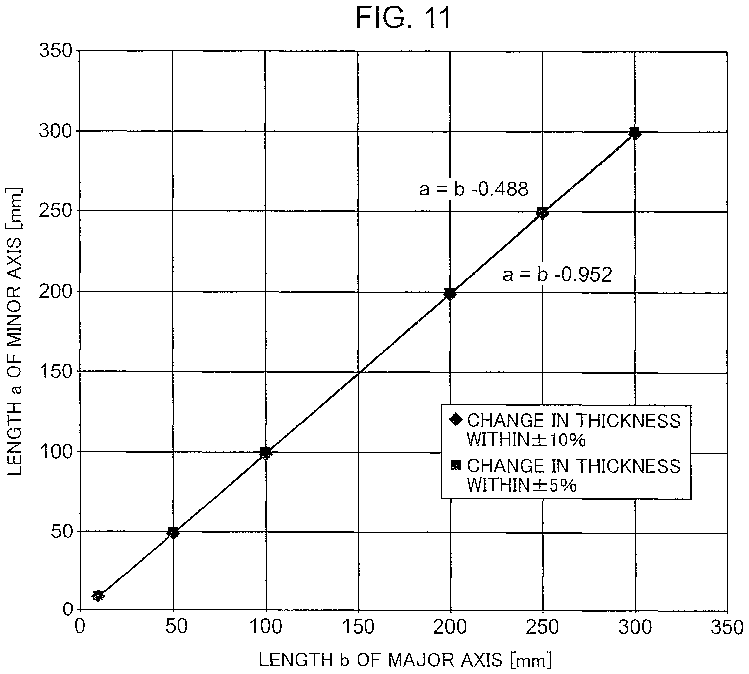

Here, FIG. 6 is a graph showing a change caused by roller rotation at an average pressure of the bank portion in the screw extruder 102 with rollers shown in FIG. 5. A horizontal axis in FIG. 6 represents the accumulated number of rotations of the roller and a vertical axis represents an average pressure in a bank portion 7. Data of a "conventional shape" shown in FIG. 6 is data in a case where the cross-sections of both the upper roller and the lower roller have a round shape. As a material to be molded, rubber was used (a material to be molded is the same also in FIG. 8 and FIG. 11 to be described later).

As can be seen from FIG. 6, in a case where the cross-sections of both the upper roller and the lower roller have a conventional shape (a round shape), the pressure of the bank portion 7 does not change. By contrast, in a case where the cross-sections of the main body portions 5a and 6a of the upper roller 5 and the lower roller 6 have an elliptic shape as shown in the embodiment in FIG. 5, the pressure of the bank portion 7 changes.

In a case of the conventional shape, an extrusion amount of a material from screws 2 and 3 and an out-flow amount of a material from between the rollers are substantially the same. By contrast, in a case where the cross-section in the main body portions 5a or 6a of at least one of the upper roller 5 and the lower roller 6 has an oval shape (e.g. elliptic shape), balance between the extrusion amount and the out-flow amount is lost. Specifically, in a case where the out-flow amount is smaller than the extrusion amount, a reverse flow of a material occurs in the bank portion 7. On the other hand, in a case where the out-flow amount is larger than the extrusion amount, a forward direction flow of a material (a flow in a direction from the screws 2 and 3 toward the rollers 5 and 6) becomes strong in the bank portion 7. As a result, the flow of the material in the bank portion 7 becomes more complicated than a conventional flow.

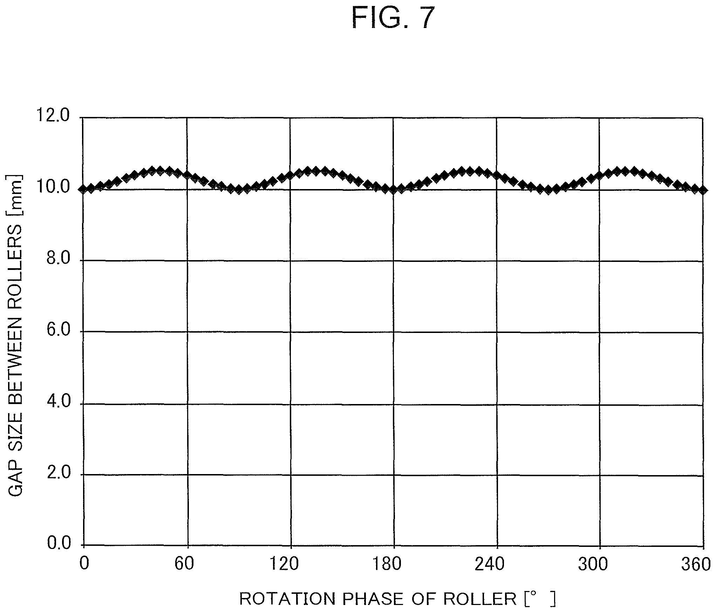

FIG. 7 is a graph showing a relationship between a rotation phase of the roller and a gap size between the rollers in the screw extruder 102 with rollers shown in FIG. 5. A horizontal axis in FIG. 7 represents a rotation phase of the roller, which shows a progress stage while the rollers 5 and 6 make one rotation (while making 360° rotation). A vertical axis in FIG. 7 represents a size of a gap between the opposed rollers 5 and 6. Analysis conditions for obtaining the result shown in the graph of FIG. 7 are as follows. Specifically, the analysis has been conducted on conditions that a minor axis SA of an ellipse (see FIG. 5), which is a cross-sectional shape perpendicular to the axial direction of each of the main body portions 5a and 6a of the rollers 5 and 6, has a length of 90 mm, a major axis LA (see FIG. 5) has a length of 100 mm, and the upper roller 5 and the lower roller 6 are rotated with a phase difference of 90°. As can be seen from FIG. 7, in a case where the cross-sectional shapes in the main body portions 5a and 6a of the upper roller 5 and the lower roller 6 are elliptic (an oval shape), when the rollers 5 and 6 are rotated, the roller gap size is changed.

A change of the roller gap size affects a thickness of a sheet-shaped material (a sheet 50) which is extruded from between the rollers 5 and 6. Specifically, in the present embodiment, a cross-sectional shape in the main body portion of at least one of the upper roller 5 and the lower roller 6 being an ellipse (an oval shape) makes a material flow in the bank portion 7 complicated, thereby enabling a kneading function to be imparted to the material in the bank portion 7. In the present embodiment, however, a thickness of the sheet-shaped material (the sheet 50) which is extruded from between the rollers 5 and 6 is more likely to change as compared with a case where both the rollers have a round cross-sectional shape. Therefore, the present inventors have also considered a cross-sectional shape of a roller for reducing a change in the thickness of the sheet 50 extruded from between the rollers 5 and 6 (for suppressing a change in the sheet thickness) as shown below.

FIG. 8 is a graph showing a relationship between a change of a thickness of the sheet 50 extruded from a gap between the rollers 5 and 6 and a length b of the major axis LA and a length a of the minor axis SA of an elliptic shape which is a shape of the cross-section of the rollers 5 and 6 in the screw extruder 102 with rollers shown in FIG. 5. A horizontal axis in FIG. 8 represents the length b (mm) of the major axis LA of the ellipse which is a cross-sectional shape of the rollers 5 and 6, and a vertical axis represents the length a (mm) of the minor axis SA of the ellipse.

In FIG. 8, a straight line expressed by an equation "a = 0.939b - 4.14" is a straight line representing a relationship between the length b (mm) of the major axis LA and the length a (mm) of the minor axis SA in a case where a change in the thickness of the sheet 50 is within a range of ±10% relative to an average thickness of the sheet 50. Also in FIG. 8, a straight line expressed by an equation "a=0.957b - 2.95" is a straight line representing a relationship between the length b (mm) of the major axis LA and the length a (mm) of the minor axis SA in a case where a change in the thickness of the sheet 50 is within a range of ±5% relative to the average thickness of the sheet 50.

Here, for example, in a case where rubber is used as the material, a smaller change in sheet thickness is better in consideration of an effect on a downstream step. Specifically, the thickness change relative to the average thickness is preferably within about ±10%. The thickness change relative to the average thickness is more preferably within about ±5%.

It can be found from FIG. 8 that in a case where the relationship between the length a (mm) of the minor axis SA and the length b (mm) of the major axis LA satisfies a condition represented by an inequality "0.939b - 4.14 ≤ a < b", a change in the sheet thickness can be suppressed within ±10%. In a case where the relationship between the length a (mm) of the minor axis SA and the length b (mm) of the major axis LA satisfies a condition represented by an inequality "0.957b - 2.95 ≤ a < b", a change in the sheet thickness can be suppressed within ±5%.

Specifically, in a case where the cross-sections of the rollers 5 and 6 have an elliptic shape, the relationship between the length a of the minor axis SA and the length b of the major axis LA preferably satisfies a condition represented by the inequality "0.939b - 4.14 ≤ a < b". Further, the relationship between the length a of the minor axis SA and the length b of the major axis LA more preferably satisfies a condition represented by the inequality "0.957b - 2.95 ≤ a < b". In a case of "a = b", the cross-sections of the rollers 5 and 6 have a round shape to become a roller having no kneading function. Therefore, the case of "a = b" is excluded.

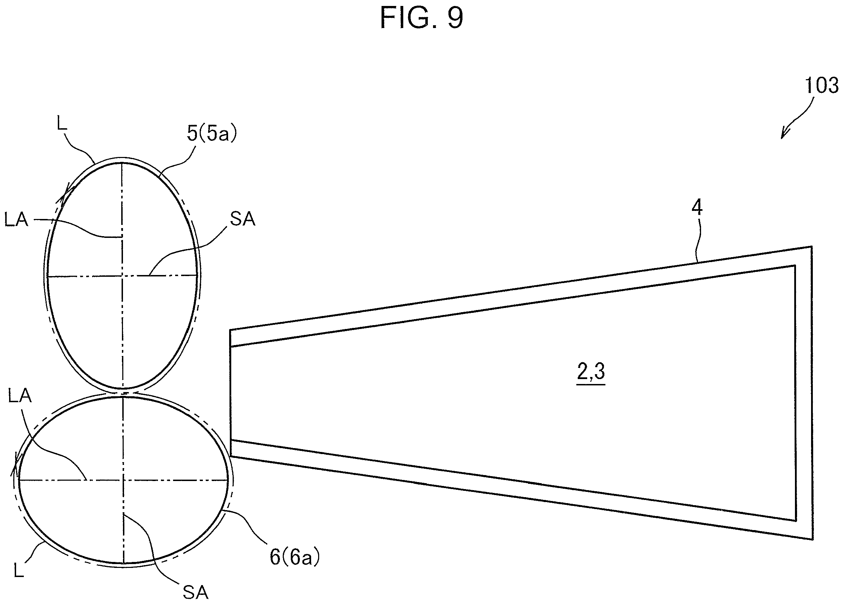

FIG. 9 shows still another embodiment of a pair of rollers 5 and 6. In the screw extruders 1 and 102 with rollers shown in FIG. 3 and FIG. 5, the cross-sections of the upper roller 5 and the lower roller 6 have the same shape, i.e., an oval shape (an elliptic shape). By contrast, although in a screw extruder 103 with rollers shown in FIG. 9, cross-sections of the upper roller 5 and the lower roller 6 both have an oval shape (an elliptic shape), the oval shapes (elliptic shapes) of the upper roller 5 and the lower roller 6 are different from each other. Specifically, in the screw extruder 103 with rollers shown in FIG. 9, a ratio of a minor axis SA to a major axis LA of the upper roller 5 is different from a ratio of a minor axis SAto a major axis LA of the lower roller 6.

Here, the rollers 5 and 6 of the screw extruder 102 with rollers shown in FIG. 5 and the rollers 5 and 6 of the screw extruder 103 with rollers shown in FIG. 9 have a feature in common except for an elliptic cross-section. That is, an elliptic circumferential length. Similarly to the case of the screw extruder 102 with rollers in FIG. 5, in the screw extruder 103 with rollers shown in FIG. 9, a circumferential length L of a main body portion 5a of the upper roller 5 and a circumferential length L of a main body portion 6a of the lower roller 6 are the same. In a case where cross-sectional shapes of the main body portions 5a and 6a of the upper roller 5 and the lower roller 6 have an oval shape (an elliptic shape in the present embodiment) having the same circumferential length, there is an advantage of facilitating control of the speeds of rotations of the rollers 5 and 6.

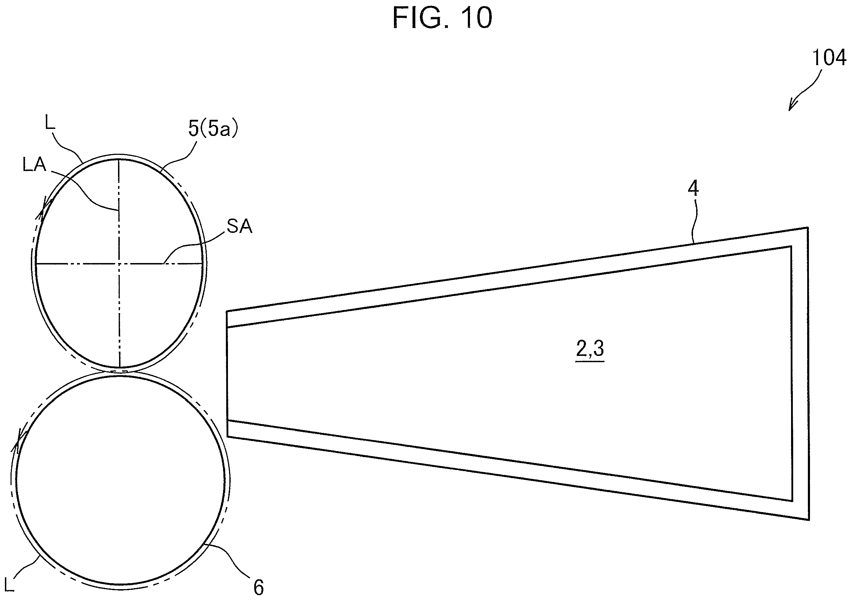

Next, FIG. 10 shows yet another embodiment of a pair of rollers 5 and 6. In any of the above-described embodiments, the cross-sections of the main body portions 5a and 6a of both the upper roller 5 and the lower roller 6 have an oval shape (an elliptic shape). By contrast, in a screw extruder 104 with rollers shown in FIG. 10, while a cross-section of a main body portion 5a of the upper roller 5 has an oval shape (an elliptic shape), a cross-section of a main body portion 6a of the lower roller 6 has a round shape.

As shown in FIG. 10, in a case where the main body portion of one of the upper roller 5 and the lower roller 6 has an oval cross-sectional shape and the main body portion of the other of the upper roller 5 and the lower roller 6 has a round cross-sectional shape, the following operation and effect can be obtained. In this configuration, a change of a capacity of the bank portion 7 is increased to result in accelerating material kneading, thereby further improving kneading performance of the screw extruder with rollers. Additionally, since portions where pressure are locally increased on the lower roller 6 having a round cross-sectional shape are generated dispersedly on the lower roller 6, it is also possible to suppress local wear of the roller.

Here, in the screw extruder 104 with rollers shown in FIG. 10, for suppressing local wear of the roller, the circumferential length L of the main body portion 5a of the upper roller 5 and the circumferential length L of the main body portion 6a of the lower roller 6 are set to be different. In this case, the upper roller 5 and the lower roller 6 are controlled to have different speeds of rotations. While the speed of rotation of the lower roller 6 is fixed, the speed of rotation of the upper roller 5 is controlled to be relatively low in a state where the lower roller 6 and the upper roller 5 are close to each other, and in other states, controlled to be relatively high. When the circumferential length L of the upper roller and the circumferential length L of the lower roller are different, in each of the rollers 5 and 6, opposed portions (pressure-increased portions) of the rollers 5 and 6 are changed by the rotation of the roller. As a result, force acting from a material onto the rollers 5 and 6 is dispersed to suppress local wear of the roller. The circumferential length L of the main body portion 5a of the upper roller 5 and the circumferential length L of the main body portion 6a of the lower roller 6 may be the same.

FIG. 11 is a graph showing a relationship between a change of a thickness of a sheet 50 extruded from a gap between the rollers 5 and 6 and a major axis length and a minor axis length of an elliptic shape on a roller cross-section of the upper roller 5 in the screw extruder 104 with rollers shown in FIG. 10. A horizontal axis in FIG. 11 represents a length b (mm) of a major axis LA of an ellipse which is the cross-sectional shape of the upper roller 5 and a vertical axis represents a length a (mm) of a minor axis SA of the ellipse.

In FIG. 11, a straight line expressed by an equation "a = b - 0.952" is a straight line representing a relationship between the length b (mm) of the major axis LA and the length a (mm) of the minor axis SA in a case where a change in the thickness of the sheet 50 is within a range of ±10% relative to an average thickness of the sheet 50. Also, a straight line expressed by an equation "a = b - 0.488" is a straight line representing a relationship between the length b (mm) of the major axis LA and the length a (mm) of the minor axis SA in a case where a change in the thickness of the sheet 50 is within a range of ±5% relative to the average thickness of the sheet 50. In FIG. 11, the straight line expressed by the equation "a = b - 0.952" and the straight line expressed by the equation "a = b - 0.488" are very close to each other.

As described above, for example, in a case where rubber is used as the material, regarding the sheet thickness, the thickness change relative to the average thickness is preferably within about ±10%, and the thickness change relative to the average thickness is more preferably within about ±5% in consideration of an effect on a downstream step.

It can be found from FIG. 11 that in a case where the relationship between the length a (mm) of the minor axis SA and the length b (mm) of the major axis LA satisfies a condition represented by an inequality "b - 0.952 ≤ a < b", a change in the sheet thickness can be suppressed within ±10%. In a case where the relationship between the length a (mm) of the minor axis SA and the length b (mm) of the major axis LA satisfies a condition represented by an inequality "b - 0.488 ≤ a < b", a change in the sheet thickness can be suppressed within ±5%.

Specifically, in a case where the cross-section of one roller has an elliptic shape and the cross-section of the other roller has a round shape, the relationship between the length a of the minor axis SA and the length b of the major axis LA of the ellipse preferably satisfies a condition represented by the inequality "b - 0.952 ≤ a < b". Further, the relationship between the length a of the minor axis SA and the length b of the major axis LA more preferably satisfies a condition represented by the inequality "b - 0.488 ≤ a < b". In a case of "a = b", the cross-section of the roller (the cross-section of the upper roller 5) has a round shape to make a combination of rollers having no kneading function (a combination of rollers both having a round cross-section). Therefore, the case of "a = b" is excluded.

Next, with respect to two specific examples, description will be made of a control method for reducing a change of the thickness of the sheet 50 (a control method for suppressing a change of a sheet thickness) extruded from the gap between the rollers 5 and 6 in the screw extruder with rollers according to the present embodiment.

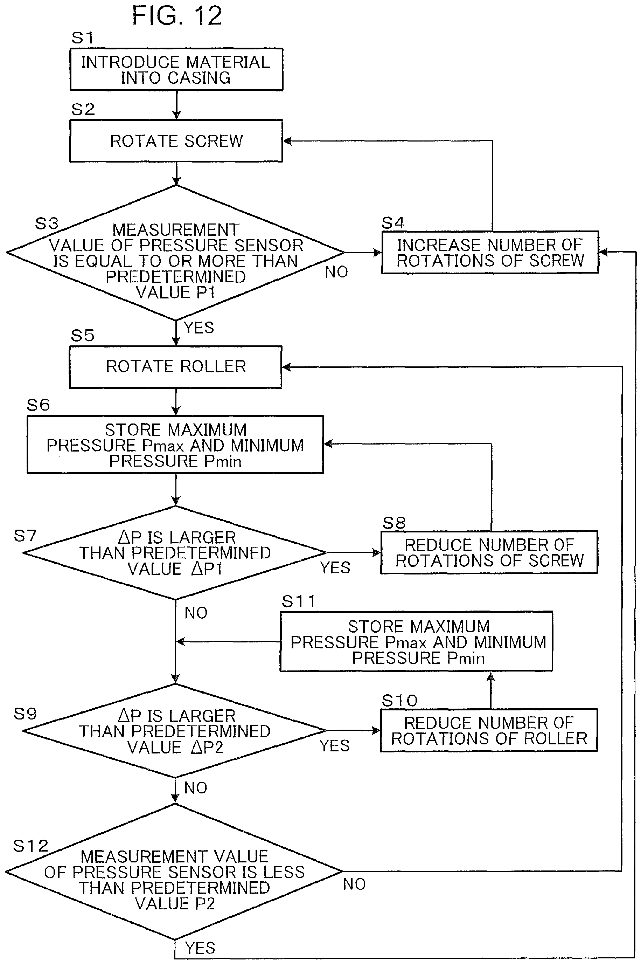

First, with reference to FIG. 12, a first control example will be described. FIG. 12 is a flow chart showing one example of a control method of the screw extruder 1 with rollers for stabilizing a sheet thickness. The control shown in FIG. 12 uses a pressure of the bank portion 7 as a criterion for determining.

As shown in FIG. 12, when a material is introduced into a casing 4 (Step S1), the screw control unit 20a of a controller 20 controls the drive means to cause screws 2 and 3 to rotate (Step S2), thereby sending the material to the bank portion 7. The determination unit 20d of the controller 20 determines whether or not a measurement value of a pressure sensor 8 is equal to or more than a predetermined value P1 (a threshold value set in advance) (Step S3). The pressure within the bank portion 7 measured by the pressure sensor 8 of less than the predetermined value P1 means that the bank portion 7 is not sufficiently filled with a material. Accordingly, in a case where the measurement value of the pressure sensor 8 is less than the predetermined value P1 (NO in Step S3), the screw control unit 20a controls the drive means to increase the speeds of rotations of the screws 2 and 3 (Step S4). By contrast, in a case where the pressure within the bank portion 7 measured by the pressure sensor 8 is equal to or more than the predetermined value P1 (YES in Step S3), the roller control unit 20b of the controller 20 controls the drive means to cause the rollers 5 and 6 to rotate (Step S5). Rotation of the rollers 5 and 6 causes a material (the sheet 50) which is molded into a sheet to be sequentially extruded from the gap between the rollers 5 and 6.

Here, for reducing a change in the thickness of the sheet 50 extruded from the gap between the rollers 5 and 6, the controller 20 controls the speeds of rotations of the screws 2 and 3 such that a difference ΔP between a maximum pressure Pmax and a minimum pressure Pmin measured by the pressure sensor 8 within a predetermined time period is equal to or less than a predetermined value ΔP1 (a threshold value set in advance). Although the predetermined time period can be set to, for example, time while the rollers 5 and 6 make one rotation, the time period is not limited thereto. The pressure within the bank portion 7 (a pressure of the material in the bank portion 7) correlates with the thickness of the sheet 50. A change range of the pressure (the ΔP) in the bank portion 7 falling within a predetermined range leads to reduction in a change of the thickness of the sheet 50 (suppresses a change of the sheet thickness).

Specifically, the storage unit 20c of the controller 20 stores the maximum pressure Pmax and the minimum pressure Pmin measured by the pressure sensor 8 while, for example, the rollers 5 and 6 make one rotation (Step S6). Then, the determination unit 20d determines whether or not the difference ΔP between the maximum pressure Pmax and the minimum pressure Pmin is larger than the predetermined value ΔP1 (Step S7). In a case where the difference ΔP is larger than the predetermined value ΔP1 (YES in Step S7), the screw control unit 20a controls the drive means to reduce the speeds of rotations of the screws 2 and 3 (Step S8). This enables the change range of the pressure in the bank portion 7 to fall within a predetermined range, thereby reducing the change of the thickness of the sheet 50 (suppressing the change of the sheet thickness).

When operation is continued for a while, reduction of a material amount in the bank portion 7 generates a cavity in the bank portion 7 and the change of the pressure in the bank portion 7 might be again increased. For suppressing the pressure change, the controller 20 controls the speeds of rotations of the rollers 5 and 6 such that the difference ΔP between the maximum pressure Pmax and the minimum pressure Pmin measured by the pressure sensor 8 within a predetermined time period is equal to or less than a predetermined value ΔP2 (a threshold value set in advance). The predetermined value ΔP2 is set to be a value smaller than the predetermined value ΔP1. Additionally, although the predetermined time period can be set to a time period, for example, in which the rollers 5 and 6 make one rotation, the predetermined time period is not limited thereto.

Specifically, in a case where the difference ΔP is equal to or less than the predetermined value ΔP1 (NO in Step S7), the determination unit 20d determines whether or not the difference ΔP between the maximum pressure Pmax and the minimum pressure Pmin measured by the pressure sensor 8 is larger than the predetermined value ΔP2 while the rollers 5 and 6 make one rotation (Step S9). In a case where the difference ΔP is larger than the predetermined value ΔP2 (YES in Step S9), the roller control unit 20b controls the drive means to reduce the speeds of rotations of the rollers 5 and 6 (Step S10). When the speeds of rotations of the rollers 5 and 6 are reduced, the material fills the bank portion 7 to reduce the change of the pressure in the bank portion 7. This enables the change of the thickness of the sheet 50 to be reduced (suppresses the change of the sheet thickness).

The storage unit 20c stores the maximum pressure Pmax and the minimum pressure Pmin per one roller rotation (Step S11) and the determination unit 20d again conducts determination of Step S9. In a case where the difference ΔP is equal to or less than the predetermined value ΔP2 (NO in Step S9) and the measurement value of the pressure sensor 8 is less than a predetermined value P2 (YES in Step S12), which means that an amount of material supply to the bank portion 7 is reduced, the controller 20 returns to the processing of Step S4, and the screw control unit 20a again controls the drive means to increase the speeds of rotations of the screws 2 and 3. By contrast, in a case where the measurement value of the pressure sensor 8 is equal to or more than the predetermined value P2 (NO in Step S12), the controller 20 again conducts the processing of Step S5.

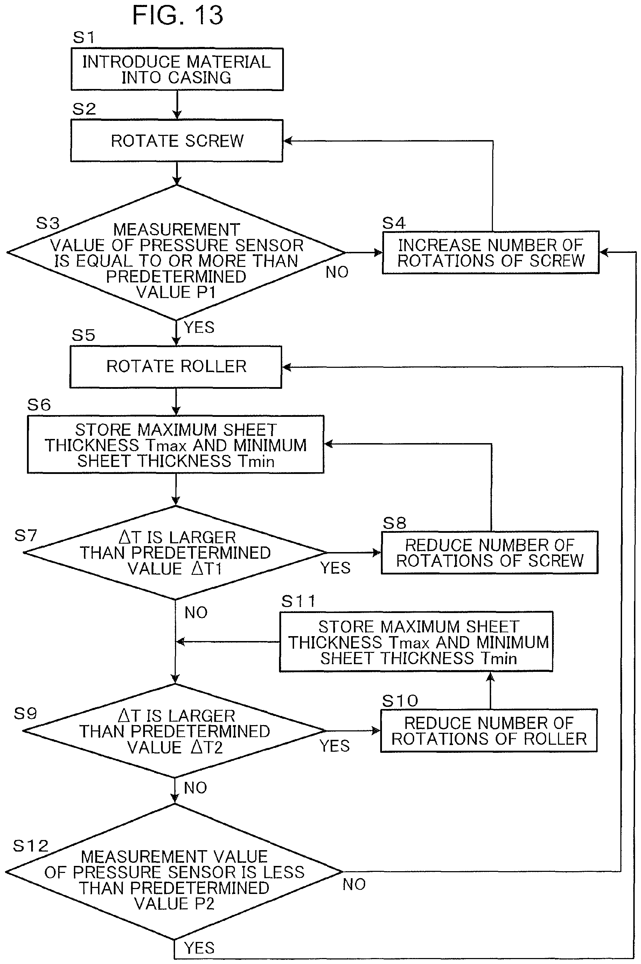

Next, a second control example will be described with reference to FIG. 13. FIG. 13 is a flow chart showing one example of a control method of the screw extruder 1 with rollers for stabilizing a sheet thickness. In the control shown in FIG. 13, a thickness of a material (the sheet 50) molded into a sheet by extrusion from the gap between the rollers 5 and 6 is used as a criterion for determining.

A part of the control flow shown in FIG. 12 and a part of the control flow shown in FIG. 13 are common. Therefore, in the control flow shown in FIG. 13, description of the same steps as those shown in FIG. 12 will not be described and mainly steps different from those shown in FIG. 12 will be described in the following.

Since Step S1 to Step S5 shown in FIG. 13 are common to Step S1 to Step S5 shown in FIG. 12, no description will be made thereof. In the control shown in FIG. 13, for reducing the change of the thickness of the sheet 50 extruded from the gap between the rollers 5 and 6, the controller 20 controls the speeds of rotations of the screws 2 and 3 such that a difference ΔT between a maximum sheet thickness Tmax and a minimum sheet thickness Tmin measured by the thickness sensor 9 within a predetermined time period is equal to or less than a predetermined value ΔT1 (a threshold value set in advance) in Step S6 to Step S8. Although the predetermined time period can be set to a time period, for example, in which the rollers 5 and 6 make one rotation, the time period is not limited thereto. In the second control example, since the thickness of the sheet 50 is used as a criterion for determining, control and a sheet thickness highly correlate with each other.
Therefore, the change of the thickness of the sheet 50 can be further reduced (the change of the sheet thickness can be further suppressed).

Specifically, the storage unit 20c stores the maximum sheet thickness Tmax and the minimum sheet thickness Tmin measured by the thickness sensor 9 while, for example, the rollers 5 and 6 make one rotation (Step S6). Then, the determination unit 20d determines whether or not the difference ΔT between the maximum sheet thickness Tmax and the minimum sheet thickness Tmin is larger than the predetermined value ΔT1 (Step S7). In a case where the difference ΔT is larger than the predetermined value ΔT1 (YES in Step S7), the screw control unit 20a controls the drive means to reduce the speeds of rotations of the screws 2 and 3 (Step S8). This reduces the difference ΔT in the sheet thickness to enable the change of the thickness of the sheet 50 to be reduced (the change of sheet thickness to be suppressed).

When operation is continued for a while, reduction of a material amount in the bank portion 7 generates a cavity in the bank portion 7 and the change of the pressure in the bank portion 7 might be increased. Because of this, the sheet thickness is changed. For directly suppressing the change of the sheet thickness, the controller 20 controls the speeds of rotations of the rollers 5 and 6 such that the difference ΔT between the maximum sheet thickness Tmax and the minimum sheet thickness Tmin measured by the thickness sensor 9 within a predetermined time period is equal to or less than the predetermined value ΔT2 (the threshold value set in advance). The predetermined value ΔT2 is set to be a value smaller than the predetermined value ΔT1. Additionally, although the predetermined time period can be set to a time period, for example, in which the rollers 5 and 6 make one rotation, the predetermined time period is not limited thereto.

Specifically, in a case where the difference ΔT is equal to or less than the predetermined value ΔT1 (NO in Step S7), the determination unit 20d determines whether or not the difference ΔT between the maximum sheet thickness Tmax and the minimum sheet thickness Tmin measured by the thickness sensor 9 is larger than the predetermined value ΔT2 while the rollers 5 and 6 make one rotation (Step S9). In a case where the difference ΔT is larger than the predetermined value ΔT2 (YES in Step S9), the roller control unit 20b controls the drive means to reduce the speeds of rotations of the rollers 5 and 6 (Step S10). When the speeds of rotations of the rollers 5 and 6 are reduced, the material fills the bank portion 7 to reduce the change of the pressure in the bank portion 7. This enables the change of the thickness of the sheet 50 to be reduced (the change of the sheet thickness to be suppressed).

The storage unit 20c stores the maximum sheet thickness Tmax and the minimum sheet thickness Tmin per one roller rotation (Step S11) and the determination unit 20d again conducts determination of Step S9. In a case where the difference ΔT is equal to or less than the predetermined value ΔT2 (NO in Step S9) and the measurement value of the pressure sensor 8 is less than the predetermined value P2 (YES in Step S12), which means that an amount of material supply to the bank portion 7 is reduced, the controller 20 returns to the processing of Step S4, and the screw control unit 20a again controls the drive means to increase the speeds of rotations of the screws 2 and 3. By contrast, in a case where the measurement value of the pressure sensor 8 is equal to or more than the predetermined value P2 (NO in Step S12), the controller 20 again conducts the processing of Step S5.

As described in the foregoing, there is provided a screw extruder with rollers having a material kneading function in addition to a sheet molding function of forming a material into a sheet.

A screw extruder with rollers to be provided serves for molding a material into a sheet by extrusion. The screw extruder with rollers includes a screw which extrudes the material; a casing which houses the screw and which is provided with a charging port for the material; and a pair of an upper roller and a lower roller which are arranged in front of the casing and mold the material extruded by the screw into a sheet. One of the upper roller and the lower roller has both end portions in an axial direction, and a main body portion between the both end portions. A cross-section of the main body portion perpendicular to the axial direction has an oval shape.

According to the screw extruder with rollers, since the cross-section perpendicular to the axial direction has an oval shape in the main body portion of at least one of the upper roller and the lower roller, when the upper roller and the lower roller rotate, a capacity of the material storage portion provided between these rollers and the casing is changed. When the capacity of the material storage portion changes, a flow of a material extruded from the casing to the material storage portion becomes more complicated than a conventional material flow. As a result, a kneading action is imparted to the material. In other words, the screw extruder with rollers has the material kneading function in addition to the sheet molding function of forming a material into a sheet.

In the screw extruder with rollers, the oval shape may be an ellipse.

In the screw extruder with rollers, the other of the upper roller and the lower roller may have both end portions in an axial direction and a main body portion between the both end portions, and a cross-section of the main body portion of the other roller perpendicular to the axial direction may have an oval shape having the same shape and the same circumferential length as the cross-section of the main body portion of the one roller. In this mode, since the cross-section of one roller and the cross-section of the other roller both have an oval shape, adjusting a phase difference between the one roller and the other roller enables adjustment of a material flow state in the material storage portion. Specifically, in this mode, an adjustable range of a material flow state in the material storage portion becomes larger as compared to a case where the cross-section of one roller has an oval shape and the cross-section of the other roller has a round shape.

In a case where the cross-section of one roller and the cross-section of the other roller both have an oval shape, the upper roller and the lower roller are preferably configured such that the upper roller and the lower roller rotate with a phase difference of 90°. In this mode, a size of a gap (a roller gap size) between one roller and the other roller has the smallest change, resulting in reducing a change of a thickness of the sheet. This enables the thickness of the sheet extruded from between the upper roller and the lower roller to be more stable.

Additionally, in a case where the cross-section of one roller and the cross-section of the other roller both have an oval shape and the upper roller and the lower roller rotate at the phase difference of 90°, it is preferable that the oval shape is an ellipse and a minor axis length a (mm) of the ellipse and a major axis length b (mm) of the ellipse satisfy a relationship of 0.939b - 4.14 ≤ a < b. This mode enables a change of a sheet thickness relative to an average sheet thickness to fall within a range of about ±10%. Further, the minor axis length a and the major axis length b more preferably satisfy a relationship of 0.957b - 2.95 ≤ a < b. This mode enables a change of a sheet thickness relative to an average sheet thickness to fall within a range of about ±5%.

In the screw extruder with rollers, the other of the upper roller and the lower roller may have both end portions in an axial direction and a main body portion between the both end portions, and a cross-section of the main body portion of the other roller perpendicular to the axial direction may have a round shape. In this mode, a change of a capacity of the material storage portion is increased to result in accelerating material kneading.

In the screw extruder with rollers, a circumferential length of the main body portion of the upper roller and a circumferential length of the main body portion of the lower roller may be different.

Also, in a case where the cross-sections of one roller has an oval shape and the cross-section of the other roller has a round shape, it is preferable that the oval shape is an ellipse and a minor axis length a (mm) of the ellipse and a major axis length b (mm) of the ellipse satisfy a relationship of b - 0.952 ≤ a < b. This mode enables a change of a sheet thickness relative to an average sheet thickness to fall within a range of ±10%. Further, the minor axis length a and the major axis length b more preferably satisfy a relationship of b - 0.488 ≤ a < b. This mode enables a change of a sheet thickness relative to an average sheet thickness to fall within a range of ±5%.

In the screw extruder with rollers, it is preferable that a cross-section of the both end portions of the one roller perpendicular to the axial direction has a round shape, the other of the upper roller and the lower roller has both end portions in an axial direction and a main body portion between the both end portions, and a cross-section of the both end portions of the other roller perpendicular to the axial direction has a round shape. In this mode, when the upper roller and the lower roller are rotated, a gap between outer circumferential surfaces of both end portions of each roller and circular arc surfaces of side guards arranged radially opposed to the both end portions are maintained constantly to be a fixed size (a fixed small gap size). As a result, it is possible to prevent leakage of a material from the material storage portion.

In the screw extruder with rollers, a material storage portion is formed between the casing and the pair of the upper roller and the lower roller, the material storage portion being where a material extruded by the screw is accumulated. The screw extruder with rollers preferably further includes a pressure sensor which measures a pressure of the material storage portion, and a screw control unit which controls a speed of rotation of the screw such that a difference between a maximum pressure and a minimum pressure measured by the pressure sensor within a predetermined time period is equal to or less than a threshold value set in advance. This mode enables a change of a sheet thickness to be smaller.

In the screw extruder with rollers, a material storage portion is formed between the casing and the pair of the upper roller and the lower roller, the material storage portion being where a material extruded by the screw is accumulated. The screw extruder with rollers preferably further includes a pressure sensor which measures a pressure of the material storage portion, and a roller control unit which controls speeds of rotations of the rollers such that a difference between a maximum pressure and a minimum pressure measured by the pressure sensor within a predetermined time period is equal to or less than a threshold value set in advance. This mode enables a change of a sheet thickness to be smaller.

The screw extruder with rollers preferably further includes a thickness sensor which measures a thickness of a sheet-shaped material extruded from between the pair of the upper roller and the lower roller, and a screw control unit which controls a speed of rotation of the screw such that a difference between a maximum thickness and a minimum thickness measured by the thickness sensor within a predetermined time period is equal to or less than a threshold value set in advance. This mode enables a change of a sheet thickness to be smaller.

The screw extruder with rollers preferably further includes a thickness sensor which measures a thickness of a sheet-shaped material extruded from between the pair of the upper roller and the lower roller, and a roller control unit which controls speeds of rotations of the rollers such that a difference between a maximum thickness and a minimum thickness measured by the thickness sensor within a predetermined time period is equal to or less than a threshold value set in advance. This mode enables a change of a sheet thickness to be smaller.

## Claims

1. A screw extruder with rollers which molds a material into a sheet by extrusion, the screw extruder comprising:
a screw which extrudes the material;
a casing which houses the screw and which is provided with a charging port for the material; and
a pair of an upper roller and a lower roller which are arranged in front of the casing and mold the material extruded by the screw into the sheet,
wherein one of the upper roller and the lower roller has both end portions in an axial direction, and a main body portion between the both end portions, and
a cross-section of the main body portion perpendicular to the axial direction has an oval shape.

2. The screw extruder with rollers according to claim 1, wherein the oval shape is an ellipse.

3. The screw extruder with rollers according to claim 1, wherein
the other of the upper roller and the lower roller has both end portions in an axial direction and a main body portion between the both end portions, and
a cross-section of the main body portion of the other roller perpendicular to the axial direction has an oval shape having the same shape and the same circumferential length as the cross-section of the main body portion of the one roller.

4. The screw extruder with rollers according to claim 3, wherein the upper roller and the lower roller are configured such that the upper roller and the lower roller rotate with a phase difference of 90°.

5. The screw extruder with rollers according to claim 4, wherein
the oval shape is an ellipse, and
a minor axis length a (mm) of the ellipse and a major axis length b (mm) of the ellipse satisfy a relationship of 0.939b - 4.14 ≤ a < b.

6. The screw extruder with rollers according to claim 5, wherein the minor axis length a and the major axis length b satisfy a relationship of 0.957b - 2.95 ≤ a < b.

7. The screw extruder with rollers according to claim 1, wherein the other of the upper roller and the lower roller has both end portions in an axial direction and a main body portion between the both end portions, and
a cross-section of the main body portion of the other roller perpendicular to the axial direction has a round shape.

8. The screw extruder with rollers according to claim 7, wherein a circumferential length of the main body portion of the upper roller and a circumferential length of the main body portion of the lower roller are different.

9. The screw extruder with rollers according to claim 7, wherein
the oval shape is an ellipse, and
a minor axis length a (mm) of the ellipse and a major axis length b (mm) of the ellipse satisfy a relationship of b - 0.952 ≤ a < b.

10. The screw extruder with rollers according to claim 9, wherein the minor axis length a and the major axis length b satisfy a relationship of b - 0.488 ≤ a < b.

11. The screw extruder with rollers according to claim 1, wherein
a cross-section of the both end portions of the one roller perpendicular to the axial direction has a round shape,
the other of the upper roller and the lower roller has both end portions in an axial direction and a main body portion between the both end portions, and
a cross-section of the both end portions of the other roller perpendicular to the axial direction has a round shape.

12. The screw extruder with rollers according to any one of claims 1 to 11, wherein
a material storage portion is formed between the casing and the pair of the upper roller and the lower roller, the material storage portion being where a material extruded by the screw is accumulated, the screw extruder with rollers further comprising:
a pressure sensor which measures a pressure of the material storage portion; and
a screw control unit which controls a speed of rotation of the screw such that a difference between a maximum pressure and a minimum pressure measured by the pressure sensor within a predetermined time period is equal to or less than a threshold value set in advance.

13. The screw extruder with rollers according to any one of claims 1 to 11, wherein
a material storage portion is formed between the casing and the pair of the upper roller and the lower roller, the material storage portion being where a material extruded by the screw is accumulated, the screw extruder with rollers further comprising:
a pressure sensor which measures a pressure of the material storage portion; and
a roller control unit which controls speeds of rotations of the rollers such that a difference between a maximum pressure and a minimum pressure measured by the pressure sensor within a predetermined time period is equal to or less than a threshold value set in advance.

14. The screw extruder with rollers according to any one of claims 1 to 11, further comprising:
a thickness sensor which measures a thickness of a sheet-shaped material extruded from between the pair of the upper roller and the lower roller; and
a screw control unit which controls a speed of rotation of the screw such that a difference between a maximum thickness and a minimum thickness measured by the thickness sensor within a predetermined time period is equal to or less than a threshold value set in advance.

15. The screw extruder with rollers according to any one of claims 1 to 11, further comprising:
a thickness sensor which measures a thickness of a sheet-shaped material extruded from between the pair of the upper roller and the lower roller; and
a roller control unit which controls speeds of rotations of the rollers such that a difference between a maximum thickness and a minimum thickness measured by the thickness sensor within a predetermined time period is equal to or less than a threshold value set in advance.
